# EUROPÄISCHE PATENTANMELDUNG

(11) **EP 3 742 278 A1**
(43) Veröffentlichungstag der Anmeldung: **25.11.2020**
(21) Anmeldenummer: 20172943.1
(22) Anmeldetag: 05.05.2020
(51) Int. Cl.: G06F 3/12

(54) **SEITENBEZOGENE STEUERUNGSDATEN**

(30) Priorität: 14.05.2019 DE 102019206936
(71) Anmelder: Heidelberger Druckmaschinen AG, 69115 Heidelberg (DE)
(72) Erfinder: Gnutzmann, Frank, 24214 Gettorf (DE); Weinholz, Peter, 24214 Tütendorf (DE)

(57) **Zusammenfassung**

Verfahren zur Vorbereitung und Durchführung von Druckaufträgen (5) in einer Druckmaschine (3) mittels eines Workflow-Systems (20) auf einem Rechner (1), wobei für bestimmte Seiten (14) des Druckauftrages (5) bestimmte Drucksubstrateigenschaften (15) ausgewählt und angeordnet werden und der Druckauftrag (5) derart konfiguriert von der Druckmaschine (3) durchgeführt wird, welches dadurch gekennzeichnet ist, dass der Rechner (1) über das Workflow-System (20) für die Druckmaschine (1) verfügbare Drucksubstrate (18) bezüglich ihrer Drucksubstrateigenschaften (15) abgleicht und den bestimmten Seiten (14) die verfügbaren Drucksubstrate (18) zuordnet, die den ausgewählten Drucksubstrateigenschaften (15) am Ähnlichsten sind.

## Beschreibung

Die Erfindung betrifft ein Verfahren zur Vorbereitung und Durchführung von Druckaufträgen im Hinblick auf die automatisierte Auswahl zu verwendender Druckmaterialien.

Die Erfindung liegt im technischen Gebiet der Druckvorstufe.

Im Stand der Technik ist bekannt, dass insbesondere Hausdruckereien großer Konzerne oft spezifische Anforderungen hinsichtlich ihrer durchgeführten Druckprozesse haben. So ist in solchen Hausdruckereien vor allem der Druck von Schulungsunterlagen ein großes Thema. Diese Schulungsunterlagen haben mehrere Besonderheiten, die im Druckalltag einer normalen Druckerei so nicht vorkommen. Diese Besonderheiten umfassen z.B. das Verwenden verschiedener Seiten wie Kapitelanfänge, welche auf farbigen Papieren gedruckt werden, das manche Seiten nur einseitig bedruckt werden sollen, dass zusätzliche Leerseiten z.B. für Notizen benötigt werden oder das Einlegeblätter oder Register eingefügt und beschriftet werden sollen, die nicht Bestandteil des Ausgangs PDFs sind.

Zur Berücksichtigung dieser Besonderheiten beim Druck von Schulungsunterlagen wird heutzutage als Workflow-System z.B. "Xerox Free Flow - Makeready" verwendet. Das System erlaubt die Auswahl von Materialen aus einem maschinenspezifischen Materialkatalog und generiert ein proprietäres Datenformat, welches dann auf der dazugehörigen Xerox Druckmaschine ausgegeben werden kann. Einlegeblätter, Registerblätter oder Papiere für Inhalte werden hier über fest definierte Materialienklassen, wie Herstellername, Papiergewicht, Papiername, Format, etc bestimmt.

Dieses Workflow-System arbeitet jedoch mit festen Materialkatalogen. Der Ersteller der Schulungsunterlagen muss also die exakte Druckmaschine und die dort aktuell vorrätigen Materialien kennen und auf seinem Arbeitsplatz getrennt pflegen. Dies ist fehleranfällig, weil hier völlig unterschiedliche Personen an teilweise verschiedenen Standorten beteiligt sind. Der Ersteller der Schulungsunterlagen im Workflow-System kennt dann nicht die vorrätigen Materialien, was dazu führt das viele Absprachen getroffen werden müssen oder der Druck abbricht, weil der Materialkatalog beim Ersteller nicht mehr aktuell ist und z.B. ein ausgewähltes Papier nicht vorrätig ist.

Ähnliches ist auch aus der deutschen Patentanmeldung DE 101 22 880 A1 bekannt. Diese offenbart eine Vorrichtung und ein Verfahren zur Bereitstellung von Anweisungen bezüglich eines gedruckten Endprodukts an eine Bearbeitungsstation für den Auflagendruck. Das gedruckte Endprodukt besteht aus einer Vielzahl von Dokumenten, die der Kunde liefert und die in eine vorgegebene Reihenfolge und in ein vorgegebenes Format gebracht werden sollen. Die Auftragsannahmestation umfasst einen Computer und einen Empfänger, der die Vielzahl von Dokumenten in einem elektronischen Format empfängt. Der Bediener verwendet eine Eingabevorrichtung, um alle Dokumente in einen elektronischen Ordner zu stellen und die Dokumente im Ordner in die für das gedruckte Endprodukt gewünschte Reihenfolge zu bringen. Der Computer ist so programmiert, dass er die Dokumente automatisch in ein druckfertiges Format konvertiert und die Vielzahl von Dokumenten zusammengefügt, so dass ein einziges Dokument entsteht. Der Computer erzeugt außerdem ein elektronisches Job-Ticket, das globale Attribute für das gedruckte Endprodukt enthält.

Diese Anmeldung beschreibt somit ein ähnliches Problem: Ein Kunde liefert seine einzelnen Rohdokumente an den Drucker und bespricht dann im Detail mit dem Drucker, was genau er haben möchte, z.B. Materialien, Register, etc. Das wird vom Drucker dann umgesetzt in ein Auftragsformat mit konkreten Druckmaschinen, Papieren, Registern, etc. Das Problem dabei ist, dass der Kunde dies nicht selber machen kann, weil er die ganzen dazu nötigen Details nicht kennt. Woher sollte er z.B. wissen, welche Seite auf welche Druckmaschine soll, weil da ein bestimmtes Material vorliegt?

Die Aufgabe der vorliegenden Erfindung besteht somit darin, ein automatisiertes Verfahren zur Vorbereitung und Durchführung von Druckaufträgen, besonders zur Herstellung von Schulungsunterlagen, zu offenbaren, welches die Effizienz der Durchführung solcher Druckaufträge erhöht sowie die Fehleranfälligkeit im Vergleich mit aus dem Stand der Technik bekannten Verfahren reduziert.

Gelöst wird diese Aufgabe durch ein Verfahren zur Vorbereitung und Durchführung von Druckaufträgen in einer Druckmaschine mittels eines Workflow-Systems auf einem Rechner, wobei für bestimmte Seiten des Druckauftrages bestimmte Drucksubstrateigenschaften ausgewählt und angeordnet werden und der Druckauftrag derart konfiguriert von der Druckmaschine durchgeführt wird, welches dadurch gekennzeichnet ist, dass der Rechner über das Workflow-System für die Druckmaschine verfügbare Drucksubstrate bezüglich ihrer Drucksubstrateigenschaften abgleicht und den bestimmten Seiten die verfügbaren Drucksubstrate zuordnet, die den ausgewählten Drucksubstrateigenschaften am Ähnlichsten sind. Entscheidend ist dabei, dass der Anwender, welcher den Druckauftrag in der Vorstufe, sprich im Workflow-System erstellt, nicht mehr wie bisher im Stand der Technik bestimmte Drucksubstrate für die besonderen Seiten des Druckauftrages auswählt, die dann ein weiterer Anwender in der Druckerei, sprich der Drucker, mühsam zusammensuchen muss und die vielleicht gar nicht in der Druckerei vorhanden sind, auswählt, sondern der Benutzer des Workflow-Systems ordnet nur den bestimmten Seiten des Druckauftrages bestimmte Drucksubstrateigenschaften zu. Das auf dem Rechner laufende Workflow-System gleicht diese zugeordneten Substrateigenschaften dann mit für die Druckmaschine verfügbaren Drucksubstraten ab und wählt stets die aus, die sich am besten für die gewünschten Substrateigenschaften eignen, d.h. diesen am ehesten entsprechen. Damit ist sichergestellt, dass der Druckauftrag schnell und effizient abgearbeitet werden kann, da der menschliche Drucker nicht erst mühsam einzelne Drucksubstrate für die bestimmten besonderen Seiten heraussuchen muss und im Falle, dass er keine gewünschten Drucksubstrate vorrätig hat, nach seinem eigenen Gusto Substrate auswählt, die vielleicht nicht dem entsprechen, was der Bearbeiter in der Druckvorstufe im Sinn hatte. Das erfindungsgemäße Verfahren ermöglicht dagegen eine schnelle automatisierte Zuordnung, ohne dass sich der Drucker in der Druckerei, die ohnehin erfahrungsgemäß mit dem Betrieb der Druckmaschine genug zu tun hat, groß um die Drucksubstratzuordnung kümmern muss. Es empfiehlt sich zudem, die Konfiguration des Rechners bzw. des Workflow-Systems, über welche bestimmt wird, wie die Zuordnung von angegebenen Substrateigenschaften zu verfügbaren Drucksubstraten durchgeführt wird, ebenfalls vom Bearbeiter in der Druckvorstufe durchführen zu lassen. Denn letztendlich hat nur dieser das zentrale Know-how, welche besonderen Drucksubstrate für die bestimmten Seiten des Druckauftrages ausgewählt werden können.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass der Rechner des Workflow-Systems Druckdaten des Druckauftrages und die den bestimmten Seiten zugeordneten Drucksubstrate in einer gemeinsamen Datei zusammenführt und an die Druckmaschine zur Durchführung des Druckauftrages weiterleitet. Ein weiterer zentraler Punkt des erfindungsgemäßen Verfahrens besteht darin, dass im bisherigen Stand der Technik die Druckdaten, welche später auf der Druckmaschine gedruckt werden sollen, in ihrem eigenen Datenformat, üblicherweise einem JDF, von der Druckvorstufe an die Druckmaschine gesendet werden, während die Informationen über die den bestimmten Seiten zugeordneten Drucksubstrate über einen externen Datenkanal dem Drucker in der Druckerei zugeführt worden sind. Dies erhöht die Fehleranfälligkeit massiv, weshalb im erfindungsgemäßen Verfahren die Informationen über die den bestimmten Seiten zugeordneten Drucksubstrate mittels des Workflow-Systems zusammen mit den eigentlichen Druckdaten der JDF-Datei in einer gemeinsamen Datei zusammengeführt werden und diese dann in einem der Druckmaschine bzw. dem Drucker zugeführt werden. Ob dabei die Informationen über die den bestimmten Seiten zugeordneten Drucksubstrate direkt ins JDF mit abgelegt werden oder ob JDF mit den Druckbilddaten und die Information über die bestimmten Seiten in einem übergeordneten Datenformat abgelegt werden, hängt von den Bedingungen des verwendeten Workflow-Systems ab.

Eine weitere bevorzugte Weiterbildung des erfindungsgemäßen Verfahrens ist dabei, dass der Rechner die den bestimmten Seiten zugeordneten Drucksubstrate so aufbereitet, dass die Zuordnung der Drucksubstrate von einem Anwender der Druckmaschine manuell geändert werden können. Auch wenn die automatisierte Abarbeitung bzw. Zuordnung der bestimmten Seiten zu bestimmten Drucksubstraten ein wesentlicher Kern des erfindungsgemäßen Verfahrens ist, ist es doch wichtig, dass der Drucker in der Druckerei auch weiterhin die Möglichkeit hat, die vom Workflow-System getroffene Zuordnung im Bedarfsfall zu ändern. Nur so kann sichergestellt werden, dass fehlerhafte Zuordnungen vom Workflow-System, welche nie hundertprozentig auszuschließen sind, doch noch korrigiert werden können.

Eine weitere bevorzugte Weiterbildung des erfindungsgemäßen Verfahrens ist dabei, dass die Drucksubstrateigenschaften der einzelnen Seiten des Druckauftrages verschiedenfarbige Papiere, bestimmte einseitig bedruckte Seiten, Leerseiten insbesondere mit einem bestimmtem Papier, Registerblätter, sowie zusätzliche Einlegeblätter, die nicht Bestandteil der Druckdaten sind, umfassen. Diese Auflistung zeigt die häufigsten Fälle bei der Durchführung von Druckaufträgen, besonders hinsichtlich der Herstellung von Schulungsunterlagen; ist jedoch keinesfalls vollständig. Im Grunde lassen sich sämtliche vom Standarddruckauftrag abweichenden Substrate, welche für einzelne Seiten verwendet werden können, über das erfindungsgemäße Verfahren abbilden.

Eine weitere bevorzugte Weiterbildung des erfindungsgemäßen Verfahrens ist dabei, dass der Rechner die für die Druckmaschine verfügbaren Drucksubstrate aus einem zentralen Katalog von Drucksubstraten auswählt, auf welchen er über das Workflow-System zugreifen kann. Den Abgleich der für die Druckmaschine verfügbaren Drucksubstrate mit den ausgewählten Substrateigenschaften kann der Rechner bzw. das Workflow-System am besten über einen zentralen Katalog durchführen. Dieser Katalog muss daher sämtliche für die Druckmaschine verfügbaren Drucksubstrate enthalten, insbesondere muss er angeben, welche Substrateigenschaften die vorhandenen Drucksubstrate aufweisen und dies in einer zu den vom Bearbeiter in der Druckvorstufe ausgewählten Substrateigenschaften kompatibel im Format. Der Katalog ist dabei üblicherweise in einer Datenbank abgelegt, auf welche mindestens das Workflow-System direkten Zugriff haben muss. Im Idealfall sollte auch ein Zugriff für den Bediener der Druckmaschine möglich sein. Der Katalog muss zudem auch sämtliche Angaben über die verfügbaren Drucksubstrate enthalten. Hier sei vor allem an die verfügbaren Mengen des jeweiligen Drucksubstrates gedacht. Falls zudem für die Anzahl der bestimmten Seiten, für die ein bestimmtes Drucksubstrat verwendet werden soll, nicht genügend Substrat vorhanden ist, ist selbstverständlich eine Zuordnung ebenfalls nicht möglich.

Eine weitere bevorzugte Weiterbildung des erfindungsgemäßen Verfahrens ist dabei, dass die Auswahl der Drucksubstrateigenschaften für die bestimmten Seiten des Druckauftrages von einem Anwender des Workflow-Systems abhängig von den Erfordernissen des Druckauftrages durchgeführt wird. Die Auswahl der für die bestimmten Seiten des Druckauftrages notwendigen Substrateigenschaften muss dabei selbstverständlich vom Ersteller des Druckauftrages in der Druckvorstufe durchgeführt werden. Zwar ist es denkbar, dass in Zukunft auch Workflow-Systeme die Druckaufträge anhand von den ursprünglichen Auftraggebern der Druckaufträge gemachten Angaben völlig automatisiert erstellen können und in diesem Fall natürlich dann auch die Auswahl der Drucksubstrateigenschaften für die bestimmten Seiten vollständig automatisiert erfolgen kann, jedoch wird bei der aktuellen Technologie davon ausgegangen, dass immer noch ein menschlicher Anwender die Druckaufträge in der Druckvorstufe bearbeitet und für den Druck auf der Druckmaschine vorbereitet.

Eine weitere bevorzugte Weiterbildung des erfindungsgemäßen Verfahrens ist dabei, dass als Druckmaschine eine Digitaldruckmaschine, insbesondere eine Tonerdruckmaschine, verwendet wird. Der Druck der bestimmten Druckaufträge, insbesondere in Form von Schulungsunterlagen, wird meist aufgrund der geringen Auflage dieser Schulungsunterlagen auf Digitaldruckmaschinen, und hier insbesondere auf Tonerdruckmaschinen, durchgeführt. Prinzipiell ist das erfindungsgemäße Verfahren jedoch auf allen industriellen Druckmaschinen, welche in einer Druckerei verwendet werden, einsetzbar.

Eine weitere bevorzugte Weiterbildung des erfindungsgemäßen Verfahrens ist dabei, dass der Rechner über das Workflow-System eine Rückmeldung gibt und die Bearbeitung des Druckauftrages aussetzt, falls keine verfügbaren Drucksubstrate den ausgewählten Drucksubstrateigenschaften zugeordnet werden können. Das Workflow-System muss natürlich, falls es zu dem Schluss kommt, dass eine Zuordnung von für die Druckmaschine verfügbaren Drucksubstraten mit den ausgewählten Drucksubstrateigenschaften nicht sinnvoll ist, bzw. zu keinem möglichen Ergebnis führt, dies dem Benutzer in der Druckvorstufe anzeigen, so dass dieser seine Anforderungen hinsichtlich der ausgewählten Drucksubstrateigenschaften entsprechend anpassen kann. Damit wird sichergestellt, dass auch wirklich immer eine Zuordnung von verfügbarem Drucksubstrat zu gewünschten Substrateigenschaften möglich ist.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

### Die Figuren zeigen:

- Figur 1:: den schematischen Aufbau eines verwendeten Workflow-Systems
- Figur 2:: eine beispielhafte Datei mit verschiedenen Seiten mit ausgewählten besonderen Drucksubstrateigenschaften, erstellt im Plugin des Workflow-Systems
- Figur 3:: den schematischen Ablauf des erfindungsgemäßen Verfahrens

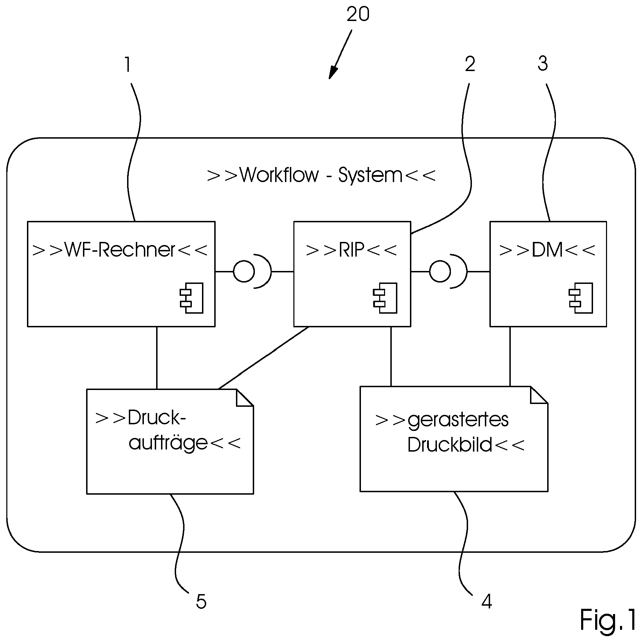

Das erfindungsgemäße Verfahren wird bevorzugt in einer Digital-Druckmaschine 3, welche in ein bestimmtes Workflow-System 20 eingebunden ist, eingesetzt. Ein solches Workflow-System 20 ist beispielhaft in Figur 1 dargestellt. Das Workflow-System 20 läuft auf einem oder mehreren Rechnern 1, über den die entsprechenden Druckaufträge 5 bearbeitet werden. Ein Druckauftrag 5, welcher auf einer Digital-Druckmaschine 3 gedruckt werden soll, wird dabei durch einen Raster-Image-Prozessor 2 gerastert und von dort werden die gerasterten Druckbilder 4 an die Digital-Druckmaschine 3 zum entsprechenden Fortdruck weitergeleitet. Als besonders bevorzugte Digital-Druckmaschine 3 wird eine Toner-Druckmaschine eingesetzt.

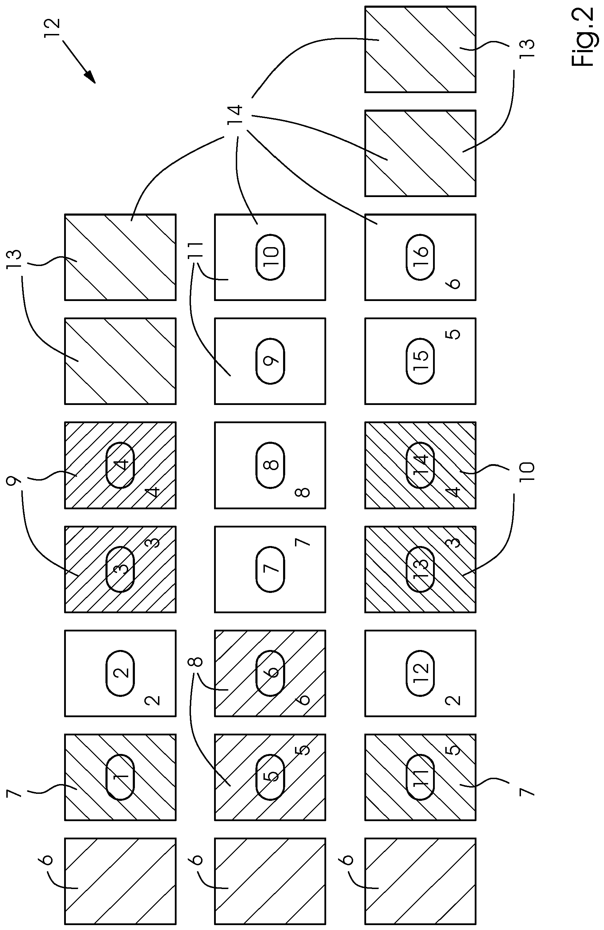

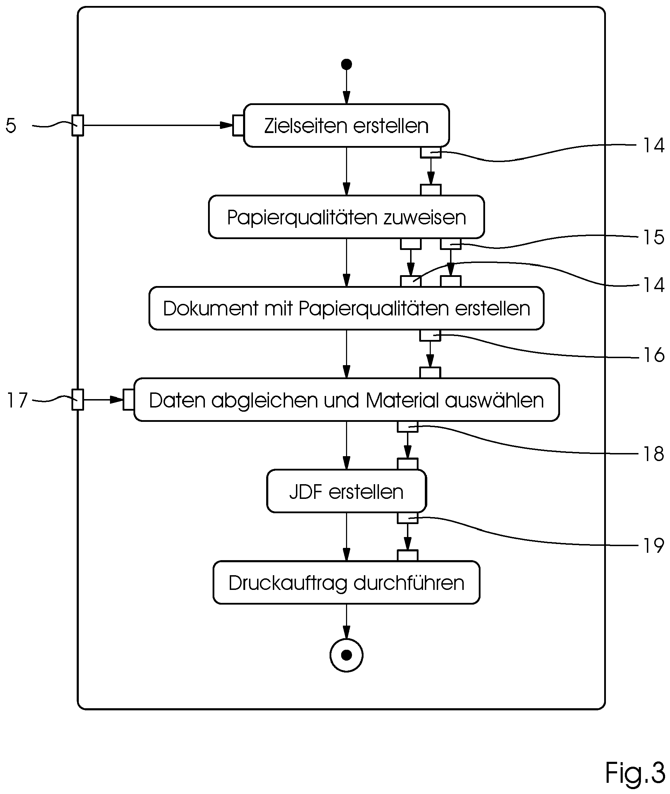

Die konkrete Implementierung im Workflow-System ist in Figur 3 schematisch bzgl. des Ablaufs des bevorzugten Ausführungsbeispiels dargestellt und arbeitet zunächst mit einem Plugin des Workflow-Systems 20 für Adobe Acrobat, in dem der Benutzer auf seinem eigenen Rechner auf vielfältige Art zunächst alle Zielseiten 14 des Druckauftrages 5, bevorzugt von Schulungsunterlagen, aus einem oder mehreren PDF Quelldokumenten zusammenstellt. Figur 2 zeigt ein Beispiel für eine Datei 12 mit verschiedenen Seiten, die mit diesem Plugin erstellt wurden. Diesen Zielseiten 14 können dann Drucksubstrateigenschaften, also vor allem Papierqualitäten 15, aus einem frei änderbaren Papierkatalog 17 zugewiesen werden. Dazu gehören zum Beispiel verschiedenfarbige Papiere 8, 9, 10, bestimmte einseitig bedruckte Seiten 7 oder Leerseiten 11, insbesondere mit einem bestimmten Papier. Zusätzlich zu den eigentlichen Zielseiten kann mittels Metainformation auch festgelegt werden, dass weitere Trennseiten, wie z.B. Registerblätter 6 oder zusätzliche Einlegeblätter 13, die nicht Bestandteil der Druckdaten 5 sind, an bestimmten Stellen, sprich zwischen bestimmten Zielseiten hinzugefügt werden. Diesen Trennseiten werden dann ebenfalls bestimmte Papierqualitäten 15 zugeordnet. Das resultierende Dokument 16, meist ein PDF-Dokument 16, wird dann in einer Vorabansicht dargestellt. Zum Abschluss können die aktuellen Einstellungen lokal gespeichert werden oder das Zieldokument 16 wird als neues PDF erstellt und vom lokalen Anwenderrechner in Acrobat geöffnet. Im neu erstellten Dokument 16 werden nun seitenbezogen alle druckrelevanten Daten 5 in Parameter-Verzeichnissen abgelegt.

Im Workflow-System 20 werden dann vom entsprechenden Workflow-Rechner 1 alle eingehenden PDF-Dokumente 16 einer "Preflight"-Prüfung unterzogen. Hier werden unter anderem seitenbezogen genutzte Farben und/oder das Format ermittelt. Diese Seiteneigenschaften, bzw. Papierqualitäten 15 werden in der JDF-Datei (Job Definition Format) 19 des Druckauftrags 5 hinterlegt. Als Erweiterung im Preflighter werden nun die neuen seitenbezogenen Steuerungsdaten hinsichtlich der Papierqualitäten 15 für den Digitaldruck ebenfalls im JDF 19 des Druckauftrags 5 abgelegt. Damit stehen diese Steuerungsdaten dann im Digitaldruck zusätzlich zu den eigentlichen Druckdaten 5 zur Verfügung und werden dort vom Rechner 1 ausgewertet. Abhängig von dieser Auswertung werden dann verfügbare Druckmaterialien 18, bzw. -substrate für den Druckauftrag 5 verwendet. Die ausgewählten Druckmaterialien 18 werden auch dem Drucker angezeigt, so dass dieser in Falle einer Fehlzuordnung noch eingreifen kann.

Das hier beschriebene Verfahren hat gegenüber dem aus dem Stand der Technik bekannten Verfahren vor allem zwei Vorteile:
1. Anstatt feste Materialien auszuwählen, wird nur eine Drucksubstratqualität 15 oder eine Beschreibung des gewünschten Substrats vom Anwender gefordert. Aufgrund dieser Daten 15 wird dann automatisch vom Workflow-System 20, bzw. Rechner 1 das geeignete verfügbare Material 18 ausgewählt, indem die in der erstellten gemeinsamen JDF-Datei 19 hinterlegte Beschreibung, bzw. Papierqualitäten 15 mit der Qualität aus dem zentralen Papierkatalog 17 der Bedruckstoffe des Workflow-Systems 20 abgeglichen wird. Dies kann ergänzend oder alternativ auch manuell durch den Drucker geschehen.
2. Alle speziellen Druckinformationen werden direkt im zu druckenden PDF 16, später JDF 19, gespeichert und sind jederzeit, z.B. direkt beim Öffnen des PDFs 16 in Adobe Acrobat oder beim Öffnen des JDFs 19 im Workflow-System, wieder verfügbar.

### Bezugszeichenliste

- 1: Workflow-Rechner
- 2: Raster-Image-Prozessor (RIP)
- 3: Druckmaschine
- 4: gerastertes Druckbild
- 5: Druckauftrag / Druckdaten
- 6: Registerblätter
- 7: einseitig bedruckte Seiten
- 8, 9,10: verschiedenfarbige Papiere
- 11: Leerseiten insbesondere mit einem bestimmtem Papier
- 12: Datei mit einzelnen Seiten
- 13: zusätzliche Einlegeblätter die nicht Bestandteil der Druckdaten sind
- 14: Zielseiten
- 15: Papierqualitäten
- 16: erstelltes Dokument (PDF) mit Papierqualitäten
- 17: Katalog
- 18: ausgewählte, verfügbare Druckmaterialien
- 19: gemeinsame Datei (JDF) mit Druckdaten und ausgewählten Druckmaterialien
- 20: Workflow-System

## Patentansprüche

1. Verfahren zur Vorbereitung und Durchführung von Druckaufträgen (5) in einer Druckmaschine (3) mittels eines Workflow-Systems (20) auf einem Rechner (1), wobei für bestimmte Seiten (14) des Druckauftrages (5) bestimmte Drucksubstrateigenschaften (15) ausgewählt und angeordnet werden und der Druckauftrag (5) derart konfiguriert von der Druckmaschine (3) durchgeführt wird,
**dadurch gekennzeichnet,**
**dass** der Rechner (1) über das Workflow-System (20) für die Druckmaschine (1) verfügbare Drucksubstrate (18) bezüglich ihrer Drucksubstrateigenschaften (15) abgleicht und den bestimmten Seiten (14) die verfügbaren Drucksubstrate (18) zuordnet, die den ausgewählten Drucksubstrateigenschaften (15) am Ähnlichsten sind.

2. Verfahren nach Anspruch 1,
**dadurch gekennzeichnet,**
**dass** der Rechner (1) des Workflow-Systems (20) Druckdaten des Druckauftrages (5) und die den bestimmten Seiten (14) zugeordneten Drucksubstrate in einer gemeinsamen Datei (19) zusammenführt und an die Druckmaschine (3) zur Durchführung des Druckauftrages (5) weiterleitet.

3. Verfahren nach einem der vorherigen Ansprüche,
**dadurch gekennzeichnet,**
**dass** der Rechner (1) die den bestimmten Seiten (14) zugeordneten Drucksubstrate so aufbereitet, dass die Zuordnung der Drucksubstrate von einem Anwender der Druckmaschine (3) manuell geändert werden können.

4. Verfahren nach einem der vorherigen Ansprüche,
**dadurch gekennzeichnet,**
**dass** die Drucksubstrateigenschaften (15) der einzelnen Seiten (14) des Druckauftrages (5) verschiedenfarbige Papiere (8, 9, 10), bestimmte einseitig bedruckte Seiten (7), Leerseiten (11), insbesondere mit einem bestimmtem Papier, Registerblätter (6), sowie zusätzliche Einlegeblätter (13), die nicht Bestandteil der Druckdaten (5) sind, umfassen.

5. Verfahren nach einem der vorherigen Ansprüche,
**dadurch gekennzeichnet,**
**dass** der Rechner (1) die für die Druckmaschine (3) verfügbaren Drucksubstrate (18) aus einem zentralen Katalog (17) von Drucksubstraten auswählt, auf welchen er über das Workflow-System (20) zugreifen kann.

6. Verfahren nach einem der vorherigen Ansprüche,
**dadurch gekennzeichnet,**
**dass** die Auswahl der Drucksubstrateigenschaften für die bestimmten Seiten (14) des Druckauftrages (5) von einem Anwender des Workflow-Systems (20) abhängig von den Erfordernissen des Druckauftrages (5) durchgeführt wird.

7. Verfahren nach einem der vorherigen Ansprüche,
**dadurch gekennzeichnet,**
**dass** als Druckmaschine (3) eine Digitaldruckmaschine, insbesondere eine Tonerdruckmaschine, verwendet wird.

8. Verfahren nach einem der vorherigen Ansprüche,
**dadurch gekennzeichnet,**
**dass** der Rechner (1) über das Workflow-System (20) eine Rückmeldung gibt und die Bearbeitung des Druckauftrages (5) aussetzt, falls keine verfügbaren Drucksubstrate (18) den ausgewählten Drucksubstrateigenschaften (15) zugeordnet werden können.
